# EUROPEAN PATENT SPECIFICATION

(11) **EP 3 818 482 B1**
(45) Date of publication and mention of the grant of the patent: **28.08.2024**
(21) Application number: 19745842.5
(22) Date of filing: 02.07.2019
(51) Int. Cl.: G06Q 10/087

(54) **INVENTORY MANAGEMENT SYSTEM**
BESTANDSVERWALTUNGSSYSTEM
SYSTÈME DE GESTION DES STOCKS

(30) Priority: 04.07.2018 IN 201811024883
(43) Date of publication of application: 12.05.2021
(73) Proprietor: Carrier Corporation, Palm Beach Gardens, FL 33418 (US)
(72) Inventor: SUGUMAR, Mohan, Hyderabad Telangana 500081 (IN); PAWAR, Pratik Shankar, Hyderabad Telangana 500081 (IN)
(74) Representative: Dehns
(86) International application number: PCT/US2019/040266
(87) International publication number: WO 2020/010061

(56) References cited:
- KR-A- 20180 049 674
- US-A1- 2008 047 282
- US-B1- 6 204 763

## Description

### BACKGROUND

The embodiments herein relate to the field of inventory management systems, and specifically to a method and apparatus for monitoring inventory.

Refrigeration systems require constant inventory checks to account for current stock in the refrigeration system and removal of expired perishable goods. The inventory checks are typically a manual process which is time consuming.

US6204763B1 discloses an automated inventory system comprising a weight sensor for detecting when restocking or partially consumed items should occur.

### BRIEF SUMMARY

Viewed from one aspect there is provided a method of monitoring inventory of perishable goods according to claim 1.

Optionally, according to an embodiment, a method of monitoring inventory of perishable goods within a refrigerator is provided. The method may include: determining, using the controller, a quantity of the one or more perishable goods within a refrigerated compartment of a refrigerator in response to the weight of the one or more perishable goods; wherein the determining, using the controller, whether the decrease in weight was due to a loss of water from the one or more perishable goods comprises: determining, using a checkout register, that the one or more perishable goods was not associated with a sale from the checkout register; and/or determining, using a door sensor, that a door to the refrigerator has not been opened; and/or determining, using one or more cameras, that the one or more perishable goods was not moved within the refrigerator.

Optionally, the notification to the vendor device may include an order for a second quantity one or more perishable goods.

Optionally, the method may include: determining a vendor from one or more vendors in response to at least one of approval ratings of each of the one or more vendors and a distance from the refrigerator to each of the one or more vendors, the vendor being in possession of the vendor device.

Optionally, the method may include: locking a door to the refrigerator when the quantity of the one or more perishable goods is equal to or less than a selected quantity.

Optionally, the method may include: decreasing cooling output of the refrigerator when the quantity of the one or more perishable goods is equal to or less than a selected quantity.

Optionally, the method may include: receiving an acceptance from the vendor device in response to the order for one or more perishable goods included in the notification.

Optionally, the method may include: tracking a location of the vendor when the vendor is delivering the order for one or more perishable goods to the refrigerator.

Optionally, the method may include: transmitting a location of the vendor to the store management device.

Optionally, the method may include determining when the vendor arrives at the refrigerator; detecting when the vendor opens a door of the refrigerator; tracking an amount of time the vendor has the door of the refrigerator open; and transmitting a notification to the vendor device when the amount of time is greater than or equal to a selected amount of time.

Optionally, the method may include: determining when the vendor arrives at the refrigerator; detecting when the vendor opens a door of the refrigerator; tracking an increase in weight of one or more perishable goods on the one or more weight measurement units; determining a new quantity of the one or more perishable goods added by the vendor in response to the increase in weight; and transmitting a payment to the vendor when the new quantity is equal to the second quantity of one or more perishable goods.

Optionally, the method may include: locking a door to the refrigerator when all of the one or more perishable goods within the refrigerated compartment are expired.

Viewed from another aspect there is provided a perishable good inventory monitoring system according to claim 11.

Optionally, embodiments may include that the notification to the vendor device includes an order for a second quantity one or more perishable goods.

Optionally, embodiments may include that the operations further include: determining a vendor from one or more vendors in response to at least one of approval ratings of each of the one or more vendors and a distance from the refrigerator to each of the one or more vendors, the vendor being in possession of the vendor device.

Optionally, embodiments may include that the operations further include: locking a door to the refrigerator when the quantity of the one or more perishable goods is equal to or less than a selected quantity.

Optionally, embodiments may include that the operations further include: decreasing cooling output of the refrigerator when the quantity of the one or more perishable goods is equal to or less than a selected quantity.

Optionally, embodiments may include that the operations further include: receiving an acceptance from the vendor device in response to the order for one or more perishable goods included in the notification.

Optionally, embodiments may include that the operations further include: tracking a location of the vendor when the vendor is delivering the order for one or more perishable goods to the refrigerator.

Optionally, embodiments may include that the operations further include: transmitting a location of the vendor to the store management device.

Technical effects of embodiments of the present disclosure include utilizing weight sensing in a refrigerator to periodically or in real-time perform inventory checks to identify expired perishable goods and request restocking of perishable goods when inventory is low.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of a perishable good inventory monitoring system, in accordance with an embodiment of the disclosure; and
FIG. 2 is a flow chart of a method of monitoring inventory of perishable goods within a refrigerator, in accordance with an embodiment of the disclosure.

### DETAILED DESCRIPTION

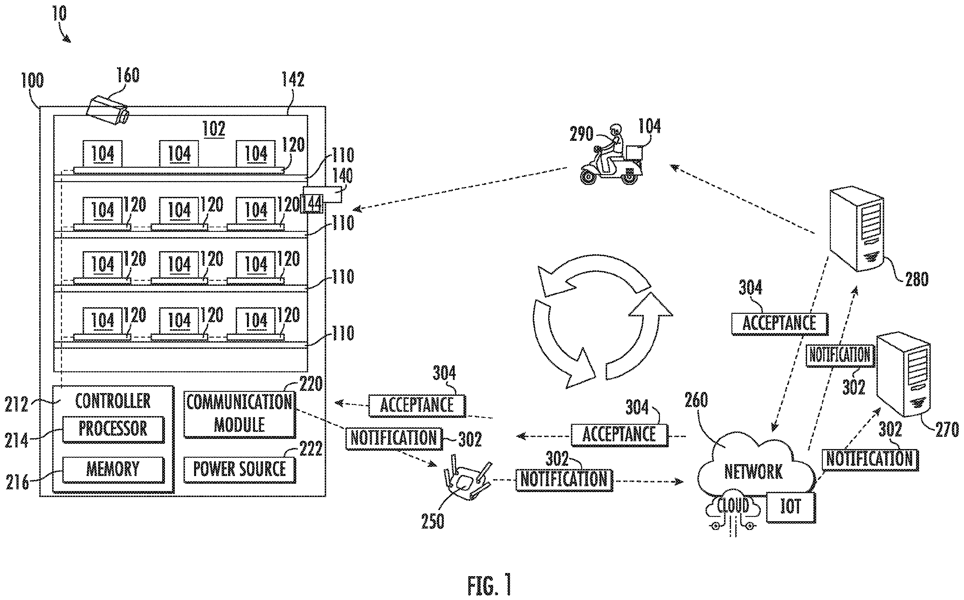

FIG. 1 is a view of a perishable good inventory monitoring system 10, according to an embodiment of the present disclosure. It is understood that while a refrigerator 100 is utilized for exemplary illustration, embodiments disclosed herein may be applied to other perishable good storage systems such as, for example, dry storage, etc. It should be appreciated that, although particular systems are separately defined in the schematic block diagrams, each or any of the systems may be otherwise combined or separated via hardware and/or software. The perishable good inventory monitoring system 10 may include one or more refrigerators 100 configured to store perishable goods 104 at appropriate environmental conditions. The refrigerator 100 provides a cooling output to a refrigerated compartment 102. The perishable goods 104 may include but are not limited to fruits, vegetables, grains, beans, nuts, eggs, dairy, seed, flowers, meat, poultry, fish, ice, blood, pharmaceuticals, or any other suitable product requiring refrigerated storage.

The refrigerator 100 includes a controller to control operation of the refrigeration cycle and cooling output of the refrigerator 100, thus controlling the environment within the refrigerated compartment 102. The controller 212 includes a processor 214 and an associated memory 216 comprising computer-executable instructions that, when executed by the processor 214, cause the processor 214 to perform various operations, such as, for example, controlling cooling output of the refrigerator 100. The processor 214 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 216 may be a storage device, such as, for example, a random access memory (RAM), read only memory (ROM), or other electronic, optical, magnetic or any other computer readable medium.

The controller 212 may be in electronic communication with a communication module 220. The communication module 220 may be configured to transmit data from the controller 212 to a wireless access protocol device 250 via short-range wireless protocols. Short-range wireless protocols may include but are not limited to Bluetooth, Wi-Fi, HaLow (801.11ah), zWave, Zigbee, or Wireless M-Bus.

The refrigerator 100 may be electrically connected to a power source 222, which is configured to supply electrical power to the refrigerator 100 and/or store electrical power. The power source 222 may be an electrical outlet that the refrigerator 100 plugs into. The power source 222 may include an energy storage system, such as, for example, a battery system, capacitor, or other energy storage system known to one of skill in the art. The power source 222 may also generate electrical power for the sensing apparatus 210. The power source 222 may also include an energy generation or electricity harvesting system, such as, for example synchronous generator, induction generator, or other type of electrical generator known to one of skill in the art.

The perishable goods 104 are stored within the refrigerated compartment 102 of the refrigerator 100 on a weight measurement unit 120. Each perishable good 104 may be stored on a separate weight measurement unit 120 or a group of perishable goods 104 may be stored on a single weight measurement unit 120. The group of perishable goods 104 stored on a single weight measurement unit 120 may be of all the same type. For example, only apples may be stored on a first weight measurement unit 120, whereas only milk may be stored on a second weight measurement unit 120.

The weight measurement unit 120 is configured to detect the weight of the perishable goods 104 being stored upon the weight measurement unit 120. The weight measurement unit 120 may be a pad that the perishable good 104 may be placed on or the weight measurement unit 120 may require a tray to hold the perishable goods 104. The tray may need to be zeroed out to cancel the weight of the tray upon installation. The weight measurement unit 120 may be digital or analog. The weight measurement unit 120 may be digital such that the weight measurement unit 120 may be configured to detect whether a selected weight is on the measurement unit 120 or not (i.e., 1 or 0). The selected weight may be set at a particular chosen weight or may simply detect whether any weight is present on the weight measurement unit 120. For instance the weight measurement unit 120 may return a "yes" or "no" that the weight measurement unit has twenty pounds on it. In another example, the weight measurement unit 120 may return a "yes" or "no" that the weight measurement unit has greater than zero pounds on it. The weight measurement unit 120 may be analog such that the weight measurement unit 120 may be configured to detect an exact weight rather than a digital return.

The weight measurement unit 120 is configured to transmit the weight of the perishable goods 104 being stored upon the weight measurement unit 120 to the controller 212 of the refrigerator 100. The weight of the perishable goods 104 may be transmitted at periodic intervals, when the weight of the perishable goods 104 changes, and/or when the weight of the perishable goods 104 reaches selected weights (i.e., a percentage of the original weight of the perishable goods 104. The weight measurement units 120 may communicate via a hardwired connection to the controller 212 and/or wirelessly to the controller 212. In an embodiment, the wireless communication between the weight measurement units 120 and the controller 212 may be via short-range wireless protocol via the communication module 220. The controller 212 may be configured to adjust the operation of the refrigerator 100 in response to the weight of the perishable goods 102 detected within the refrigerated compartment 102. For example, if a large quantity of perishable goods 104 are detected within the refrigerated compartment 102, the controller 212 may need to increase to the cooling output of the refrigerator 104, whereas if less perishable goods 104 are detected within the refrigerated compartment 102, the controller 212 may be allowed to decrease the cooling output of the refrigerator 104 because of having less mass to cool within the refrigerated compartment 102. The controller 212 may also be able to analyze the performance of the refrigerator 100 by monitoring how the cooling output of the refrigerator 100 performs when there are a large quantity of perishable goods 104 within the refrigerated compartment 102 (i.e., high mass load) and when there are a small quantity of perishable goods 104 within the refrigerated compartment 102 (i.e., low mass load).

When the perishable goods 104 are placed upon the weight measurement unit 120 by a vendor, the vendor 290 may enter in the type and quantity of the perishable goods 104. In one example, the vendor 290 may enter the type and quantity of the perishable goods 104 by scanning a bar code on the perishable goods, when they are being loaded into the refrigerator 100. The information scanned from the bar codes is then uploaded to an inventory database, which is connected to the controller 212. In another example, a vendor 290 can directly upload an inventory list of the reloaded perishable goods 104 to the controller 212 through the network 260 from a mobile and web application on the vendor device 280, which may be automated. The vendor 290 may also enter in the expiration date of the perishable good 104 or the expiration dates of the perishable goods 104 may be determined by the controller 212 in response to the type of perishable goods 104 and the date that the perishable goods 104 entered the refrigerated compartment 102. In the event a perishable good 104 is detected to be still upon the weight measurement units 120 after the expiration date of the perishable good 104, then the controller 212 is configured to transmit a notification 302 to a store management device 270 in order to alert the store management of the expired perishable good 104. The notification 302 may also be transmitted to a vendor device 280 in order to alert the vendor 290 that an additional order of the expired perishable good 104 is required.

The notifications 302 may be transmitted from the communication module 220 to the wireless access protocol device 250 and the wireless access protocol device 250 is then configured to transmit the notification through one or more computer networks 260 (i.e., cloud computing network, internet of things (IOT), etc.). The computer network 260 transmits the notification 302 to the store management device 270 and vendor device 280.

The store management device 270 may be a computing device, such as, for example, a desktop computer. The store management device 270 may also be a mobile computing device that is typically carried by a person, such as, for example a smartphone, PDA, smartwatch, tablet, laptop, etc. The store management device 270 may also be two separate devices that are synced together, such as, for example, a cellular phone and a desktop computer synced over an internet connection. The controller 212 may also be configured to transmit a notification 302 to the store management device 270 when the number of perishable goods 104 within the refrigerated compartment 102 of the refrigerator 100 is less than or equal to a selected number, such that the store manager may be able to clean the refrigerated compartment 102 of the refrigerator 100. For example, a notification 302 may be transmitted to the store management device 270 when the refrigerated compartment 102 of the refrigerator 100 is empty, which may mean that the store manager can now clean the refrigerated compartment 102 of the refrigerator 100.

The controller 212 may also be in communication with a checkout register within the store. The controller 212 may transmit a notification 302 to the store management device 270 when the controller 212 has detected a loss of water from the perishable good 104 by detecting a decrease in the weight of the perishable good 104 without a sale of the perishable good 104 from the checkout register. For example, as a fruit ages, it may lose water to the atmosphere within the refrigerated compartment 102, thus resulting in a decrease in weight, which would otherwise register as a decrease inventory of the perishable goods 104 if the controller 212 did not compare the decrease in weight of the perishable goods 104 to the sales of the perishable goods 104 from the checkout register. The controller 212 may also be in communication with a door sensor 140 on a door 142 in order to detect whether weight is being lost from the perishable good 104 without perishable goods 104 being removed from the weight measurement unit 120 (i.e., the door 142 to the refrigerated compartment 102 of the refrigerator 100 may have never been opened but weight is lost).

Additionally, the perishable good inventory monitoring system 10 may also include one or more cameras 160 configured to capture images of the perishable goods 104 within the refrigerated compartment 102 of the refrigerator 100 and perform image diagnostics. For instance, when a perishable good 102 is moved from a first weight measurement unit 120 to a second weight measurement unit 120 then the camera 160 may be utilized to verify that a decrease in the weight on the first weight measurement unit 120 and an increase in the weight on the second weight measurement unit 120 was due to the perishable good 102 being moved from the first weight measurement unit 120 to the second weight measurement unit 120.

Additionally, the controller 212 may also be configured to lock the door 142 to the refrigerated compartment 102 when the number of perishable goods 104 within the refrigerated compartment 102 of the refrigerator 100 is less than or equal to a selected number, so that customers of the store do not open and close the door 142 of the refrigerator 100 if there is not an adequate amount of perishable goods 104 with the refrigerated compartment 102. For example, door 142 may be locked when the refrigerated compartment 102 of the refrigerator 100 is empty, which would advantageously help the refrigerator 100 save energy by not allowing customers to open and close the door 142 when no perishable goods 104 are present within the refrigerator 100, which would let out the cold air.

The vendor device 280 may be a computing device, such as, for example, a desktop computer. The store management device 270 may also be a mobile computing device that is typically carried by a person, such as, for example a smartphone, PDA, smartwatch, tablet, laptop, etc. The vendor device 280 may also be two separate devices that are synced together, such as, for example, a cellular phone and a desktop computer synced over an internet connection.

The controller 212 may also be configured to transmit a notification 302 to the vendor device 280 when a number of perishable goods 104 within the refrigerated compartment 102 of the refrigerator 100 is less than or equal to a certain number, such that more perishable goods may need to be delivered by the vendor 290. The controller may determine a number or quantity of perishable goods 104 within the refrigerated compartment from the weight detected by the weight measurement units 120. For example, that perishable good 104 may reach a selected quantity that may necessitate that the vendor 290 deliver more perishable goods 104. The selected quantity may vary with respected to time of day, and day of the year. For example, there may high demand for refrigerated water during the hot summer months, thus the selected weight that prompts the notification to the vendor 290 may be higher due to the fact that the perishable good 104 will be consumed faster.

The controller 212 may also be configured to transmit a notification 302 to the vendor device 280 when the door sensor 140 detects that the vendor 290 is taking too long to load the perishable goods 104 into the refrigerated compartment 102 of the refrigerator 100, thus letting out too much cold air or allowing frost to build up within the refrigerated compartment 102.

There may be more than one vendors 290 in the perishable good inventory monitoring system 10, thus there may be more than one vendor device 280. The controller 212 is configured to determine which of the one or more vendors 290 to transmit the notification to. The controller 212 may take into account many variables when determining which vendor 290 to transmit the notification 302 to refill the perishable goods including but not limited to approval rating and/or distance. Each vendor 290 may have an approval rating (e.g., a star rating) that rates that quality of their services based upon various factors including responsiveness, timeliness, quality of the perishable goods 104, and capacity to fulfill orders for new perishable goods 104. The controller 212 may automatically pick the vendor 290 with the highest rating and if that vendor 290 is not available or cancels, then the next highest ranked vendor 290 may be selected and sent the notification 302 requesting an order of perishable goods 104. Additionally the distance between the vendor 290 and the refrigerator 100 may be factored into play depending upon the urgency of the need for perishable goods 104. For example, if perishable goods 104 are needed to refill the refrigerator 104 in the next few hours than the controller 212 may have to weigh the closeness of the vendor 290 over the approval rating because time is of the essence.

The vendor 290 may accept the order for one or more perishable goods 104 and indicate the acceptance by transmitting an acceptance 304 to the communication module 220. Once a vendor 290 has received the notification 302 and accepted (i.e., transmitted the acceptance 304) the request to deliver the perishable goods, the location and progress of the vendor 290 may be tracked throughout the delivery of the perishable goods 104 utilizing the vendor device 280. The location of the vendor 290 may be tracked and transmitted to the store management device 270, so that the store manager is aware of where the vendor 290 is located and when the vendor 290 will arrive with the perishable good 104 to load into the refrigerator 100. For example, the location of the vendor device 280 may be tracked via GPS. Utilizing the location tracking of the vendor 290 and the weight measurement units 120, it may be determined when the vendor 290 is at the refrigerator 100 and loading perishable goods 104 into the refrigerated compartment 102 (e.g., the vendor 290 will be at the refrigerator 100 and the weight on the weight measurement units 120 may be changing. The controller 212 may be configured to track how long it takes the vendor 290 to load the perishable goods 104 (i.e., loading time) into the refrigerator 100 and thus this loading time may affect the approval rating of the vendor 290.

The controller 212 may be configured to authorize/release/transmit a payment to the vendor 290 when the controller 212 has determined that the vendor 290 has completed restocking the perishable goods 104 in accordance with the notification 302. For example, the notification 302 may have order fifty apples and when the vendor 290 is determined to be located at the refrigerator 100 and the weight measurement units 120 have detected that fifty apples have been loaded into the refrigerated compartment 102 then the controller 212 may pay the vendor 290.

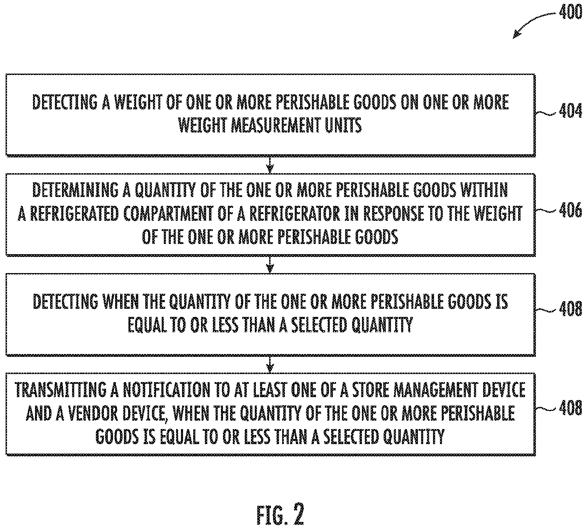

Referring now to FIG. 2, while referencing components of FIG. 1. FIG. 2 shows a flow chart of a method 400 for monitoring inventory of perishable goods 104 within a refrigerator 100. At block 404, a weight of one or more perishable goods 104 on one or more weight measurement units is detected. At block 406, a quantity of the one or more perishable goods 104 within a refrigerated compartment 102 of a refrigerator 100 is determined in response to the weight of the one or more perishable goods 104. At block 408, it is detected when the quantity of the one or more perishable goods 104 is equal to or less than a selected quantity.

At block 410, a notification 304 is transmitted to at least one of a store management device 270 and a vendor device 280, when the quantity of the one or more perishable goods 104 is equal to or less than a selected quantity. In an embodiment, the notification 302 to the vendor device 280 includes an order for a second quantity one or more perishable goods 104 (i.e., a new order to replenish perishable goods 104 being bought by consumers). The vendor device 280 may be in possession of a vendor 290. As mentioned above, the vendor 290 may be determined from one or more vendors 290 in response to at least one of approval ratings of each of the one or more vendors 290 and a distance from the refrigerator 100 to each of the one or more vendors 290. In order to accept the order, the vendor device 280 may transmit an acceptance 304 back to the controller 212, thus the method 400 may include receiving an acceptance 304 from the vendor device 280 in response to the order for one or more perishable goods 104 included in the notification 302. Once the vendor 290 has accepted the order the location of the vendor 290 may be tracked the vendor 290 is delivering the order for one or more perishable goods 104 to the refrigerator 100. The location of the vendor 290 may be transmitted to the store management device 270 so that the store manager is aware of when the vendor 290 may arrive at the store.

The method 400 may include: determining when the vendor 290 arrives at the refrigerator 100; detecting when the vendor 290 opens a door 142 of the refrigerator 100; tracking an amount of time the vendor 290 has the door 142 of the refrigerator 100 open; and transmitting a notification to the vendor device 280 when the amount of time is greater than or equal to a selected amount of time.

The method 400 may further include: determining when the vendor 290 arrives at the refrigerator 100; detecting when the vendor 290 opens a door 142 of the refrigerator 100; tracking an increase in weight of one or more perishable goods 104 on the one or more weight measurement units 120; determining a new quantity of the one or more perishable goods 104 added by the vendor 290 in response to the increase in weight; and transmitting a payment to the vendor 290 when the new quantity is equal to the second quantity of one or more perishable goods 104.

The method 400 may further comprise locking a door 142 to the refrigerator 100 when the quantity of the one or more perishable goods 104 is equal to or less than a selected quantity. For example, the door 142 may be lock 142 so that customers do not inadvertently open the door 142 when there is no perishable goods 104 to buy within the refrigerator 100. The method 400 may also include decreasing cooling output of the refrigerator 100 when the quantity of the one or more perishable goods 104 is equal to or less than a selected quantity. The method 400 may further comprise locking a door 142 to the refrigerator 100 when all of the one or more perishable goods 104 within the refrigerated compartment 102 are expired. A consumer may receive a notification that the refrigerator 100 is locked by various methods including on a mobile device (i.e., cell phone) belonging to the consumer. Once locked, the refrigerator 100 may only be opened by the vendor 290 or store manager, while remaining locked to the consumer.

While the above description has described the flow process of FIG. 2 in a particular order, it should be appreciated that unless otherwise specifically required in the attached claims that the ordering of the steps may be varied.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, subcombinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of monitoring inventory of perishable goods, the method comprising:
detecting, using one or more weight measurement units (120), a weight of one or more perishable goods on the one or more weight measurement units;
determining, using a controller (212), a quantity of the one or more perishable goods within an area in response to the weight of the one or more perishable goods;
detecting, using the one or more weight measurement units, a decrease in weight of the one or more perishable goods;
determining, using the controller, that the decrease in weight, which would otherwise register as a decrease of inventory of the one or more perishable goods, was due to a loss of water from the one or more perishable goods, the determining step is performed by:
determining, using a checkout register, that the one or more perishable goods was not associated with a sale from the checkout register; and/or
determining, using a door sensor (140), that a door (142) to the area has not been opened; and/or
determining, using one or more cameras (160), that the one or more perishable goods was not moved within the area;
detecting, using the controller, when the quantity of the one or more perishable goods is equal to or less than a selected quantity; and
transmitting, using a communication module (220), a notification to at least one of a store management device (270) and a vendor device (280), when the quantity of the one or more perishable goods is equal to or less than a selected quantity.

2. The method of claim 1, wherein the method comprises a method of monitoring inventory of perishable goods within a refrigerator (100) and includes:
determining, using the controller (212), a quantity of the one or more perishable goods within a refrigerated compartment (102) of a refrigerator in response to the weight of the one or more perishable goods;
and wherein the determining, using the controller, whether the decrease in weight was due to a loss of water from the one or more perishable goods comprising:
determining, using a checkout register, that the one or more perishable goods was not associated with a sale from the checkout register; and/or
determining, using a door sensor (140), that a door (142) to the refrigerator has not been opened; and/or
determining, using one or more cameras (160), that the one or more perishable goods was not moved within the refrigerator.

3. The method of claim 2, wherein the notification to the vendor device (280) includes an order for a second quantity one or more perishable goods; and optionally,
determining a vendor (290) from one or more vendors in response to at least one of approval ratings of each of the one or more vendors and a distance from the refrigerator (100) to each of the one or more vendors, the vendor being in possession of the vendor device.

4. The method of claim 2 or 3, further comprising:
locking, using the controller (212), the door (142) to the refrigerator (100) when the quantity of the one or more perishable goods is equal to or less than a selected quantity.

5. The method of claim 2, 3 or 4, further comprising:
decreasing, using the controller (212), cooling output of the refrigerator (100) when the quantity of the one or more perishable goods is equal to or less than a selected quantity.

6. The method of claim 3, further comprising:
receiving, using the communication module (220), an acceptance from the vendor device (280) in response to the order for one or more perishable goods included in the notification.

7. The method of claim 6, further comprising:
tracking, using a global positioning system (GPS), a location of the vendor (290) when the vendor is delivering the order for one or more perishable goods to the refrigerator (100); and optionally,
transmitting a location of the vendor to the store management device (270).

8. The method of claim 7, further comprising:
determining, using GPS, when the vendor (290) arrives at the refrigerator (100);
detecting, using the door sensor (140), when the vendor opens a door (142) of the refrigerator;
tracking, using the door sensor, an amount of time the vendor has the door of the refrigerator open; and
transmitting a notification to the vendor device when the amount of time is greater than or equal to a selected amount of time.

9. The method of claim 7, further comprising:
determining, using GPS, when the vendor (290) arrives at the refrigerator (100);
detecting, using the door sensor (140), when the vendor opens a door (142) of the refrigerator;
tracking an increase in weight of one or more perishable goods on the one or more weight measurement units (120);
determining, using the controller (212), a new quantity of the one or more perishable goods added by the vendor in response to the increase in weight; and
transmitting, using the communication module (220), a payment to the vendor when the new quantity is equal to the second quantity of one or more perishable goods.

10. The method of any of claims 2 to 9, further comprising:
locking, using the controller (212), a door (142) to the refrigerator (100) when all of the one or more perishable goods within the refrigerated compartment (102) are expired.

11. A perishable good inventory monitoring system, comprising:
a processor (214); and
a memory (216) comprising computer-executable instructions that, when executed by the processor, cause the processor to perform operations, the operations comprising:
detecting, using one or more weight measurement units (120), a weight of one or more perishable goods on the one or more weight measurement units;
determining, using a controller (212), a quantity of the one or more perishable goods within a refrigerated compartment (102) of a refrigerator (100) in response to the weight of the one or more perishable goods;
detecting, using the one or more weight measurement units, a decrease in weight of the one or more perishable goods;
determining, using the controller, that the decrease in weight, which would otherwise register as a decrease of inventory of the one or more perishable goods, was due to a loss of water from the one or more perishable goods, the determining step is performed by:
determining, using a checkout register, that the one or more perishable goods was not associated with a sale from the checkout register; and/or
determining, using a door sensor (140), that a door (142) to the refrigerator has not been opened; and/or
determining, using one or more cameras (160), that the one or more perishable goods was not moved within the refrigerator;
detecting, using the controller, when the quantity of the one or more perishable goods is equal to or less than a selected quantity; and
transmitting, using a communication module (220), a notification to at least one of a store management device (270) and a vendor device (280), when the quantity of the one or more perishable goods is equal to or less than a selected quantity.

12. The perishable good inventory monitoring system of claim 11, wherein the notification to the vendor device (280) includes an order for a second quantity one or more perishable goods; and optionally,
wherein the operations further comprise determining a vendor (290) from one or more vendors in response to at least one of approval ratings of each of the one or more vendors and a distance from the refrigerator (100) to each of the one or more vendors, the vendor being in possession of the vendor device (280).

13. The perishable good inventory monitoring system of claim 11, wherein the operations further comprise:
locking, using the controller (212), a door to the refrigerator (100) when the quantity of the one or more perishable goods is equal to or less than a selected quantity.

14. The perishable good inventory monitoring system of claim 11, wherein the operations further comprise:
decreasing, using the controller (212), cooling output of the refrigerator (100) when the quantity of the one or more perishable goods is equal to or less than a selected quantity.

15. The perishable good inventory monitoring system of claim 12, wherein the operations further comprise:
receiving, using the communication module (220), an acceptance from the vendor device (280) in response to the order for one or more perishable goods included in the notification; and/or
tracking, using GPS, a location of the vendor (290) when the vendor is delivering the order for one or more perishable goods to the refrigerator (100), and optionally,
transmitting a location of the vendor to the store management device (270).

## Patentansprüche

1. Verfahren zum Überwachen eines Bestands verderblicher Waren, wobei das Verfahren Folgendes umfasst:
Detektieren, unter Verwendung von einer oder mehreren Gewichtsmesseinheiten (120), eines Gewichts von einer oder mehreren verderblichen Waren auf der einen oder den mehreren Gewichtsmesseinheiten;
Bestimmen einer Menge der einen oder mehreren verderblichen Waren innerhalb eines Bereichs unter Verwendung einer Steuerung (212) als Reaktion auf das Gewicht der einen oder mehreren verderblichen Waren;
Detektieren einer Gewichtsabnahme der einen oder mehreren verderblichen Waren unter Verwendung der einen oder mehreren Gewichtsmesseinheiten;
Bestimmen unter Verwendung der Steuerung, dass die Gewichtsabnahme, die ansonsten als eine Bestandsabnahme der einen oder mehreren verderblichen Waren registriert würde, aufgrund eines Wasserverlusts der einen oder mehreren verderblichen Waren war, wobei der Bestimmungsschritt durchgeführt wird durch:
Bestimmen unter Verwendung eines Kassenregisters, dass die eine oder mehreren verderblichen Waren nicht einem Verkauf aus dem Kassenregister zugeordnet wurden; und/oder
Bestimmen unter Verwendung eines Türsensors (140), dass eine Tür (142) zu dem Bereich nicht geöffnet wurde; und/oder
Bestimmen unter Verwendung einer oder mehrerer Kameras (160), dass die eine oder mehreren verderblichen Waren nicht innerhalb des Bereichs bewegt wurden;
Detektieren unter Verwendung der Steuerung, wenn die Menge der einen oder mehreren verderblichen Waren gleich oder kleiner als eine ausgewählte Menge ist; und
Übertragen einer Benachrichtigung an mindestens eines von einer Ladenverwaltungsvorrichtung (270) und einer Verkäufervorrichtung (280) unter Verwendung eines Kommunikationsmoduls (220), wenn die Menge der einen oder mehreren verderblichen Waren gleich oder kleiner als eine ausgewählte Menge ist.

2. Verfahren nach Anspruch 1, wobei das Verfahren ein Verfahren zum Überwachen eines Bestands verderblicher Waren innerhalb eines Kühlschranks (100) umfasst und Folgendes beinhaltet:
Bestimmen einer Menge der einen oder mehreren verderblichen Waren innerhalb eines gekühlten Fachs (102) eines Kühlschranks unter Verwendung der Steuerung (212) als Reaktion auf das Gewicht der einen oder mehreren verderblichen Waren;
und wobei das Bestimmen unter Verwendung der Steuerung, ob die Gewichtsabnahme aufgrund eines Wasserverlusts der einen oder mehreren verderblichen Waren war, Folgendes umfasst:
Bestimmen unter Verwendung eines Kassenregisters, dass die eine oder mehreren verderblichen Waren nicht einem Verkauf aus dem Kassenregister zugeordnet wurden; und/oder
Bestimmen unter Verwendung eines Türsensors (140), dass eine Tür (142) zu dem Kühlschrank nicht geöffnet wurde; und/oder
Bestimmen unter Verwendung einer oder mehrerer Kameras (160), dass die eine oder mehreren verderblichen Waren nicht innerhalb des Kühlschranks bewegt wurden.

3. Verfahren nach Anspruch 2, wobei die Benachrichtigung an die Verkäufervorrichtung (280) eine Bestellung einer zweiten Menge einer oder mehrerer verderblicher Waren umfasst; und optional
Bestimmen eines Verkäufers (290) aus einem oder mehreren Verkäufern als Reaktion auf mindestens eines von Zustimmungsbewertungen jedes der einen oder mehreren Verkäufer und einer Entfernung von dem Kühlschrank (100) zu jedem der einen oder mehreren Verkäufer, wobei der Verkäufer im Besitz der Verkäufervorrichtung ist.

4. Verfahren nach Anspruch 2 oder 3, ferner umfassend:
Verriegeln der Tür (142) des Kühlschranks (100) unter Verwendung der Steuerung (212), wenn die Menge der einen oder mehreren verderblichen Waren gleich oder kleiner als eine ausgewählte Menge ist.

5. Verfahren nach Anspruch 2, 3 oder 4, ferner umfassend:
Verringern einer Kühlausgabe des Kühlschranks (100) unter Verwendung der Steuerung (212), wenn die Menge der einen oder mehreren verderblichen Waren gleich oder kleiner als eine ausgewählte Menge ist.

6. Verfahren nach Anspruch 3, ferner umfassend:
Empfangen einer Annahme von der Verkäufervorrichtung (280) unter Verwendung des Kommunikationsmoduls (220) als Reaktion auf die Bestellung einer oder mehrerer verderblicher Waren, die in der Benachrichtigung beinhaltet ist.

7. Verfahren nach Anspruch 6, ferner umfassend:
Verfolgen eines Standorts des Verkäufers (290) unter Verwendung eines globalen Positionierungssystems (GPS), wenn der Verkäufer die Bestellung einer oder mehrerer verderblicher Waren an den Kühlschrank (100) liefert; und optional
Übertragen eines Standorts des Verkäufers an die Ladenverwaltungsvorrichtung (270).

8. Verfahren nach Anspruch 7, das ferner Folgendes umfasst:
Bestimmen unter Verwendung von GPS, wann der Verkäufer (290) an dem Kühlschrank (100) ankommt;
Detektieren unter Verwendung des Türsensors (140), wann der Verkäufer eine Tür (142) des Kühlschranks öffnet;
Verfolgen einer Zeitspanne, für die der Verkäufer die Kühlschranktür geöffnet hat, unter Verwendung des Türsensors; und
Übertragen einer Benachrichtigung an die Verkäufervorrichtung, wenn die Zeitspanne größer oder gleich einer ausgewählten Zeitspanne ist.

9. Verfahren nach Anspruch 7, das ferner Folgendes umfasst:
Bestimmen unter Verwendung von GPS, wann der Verkäufer (290) an dem Kühlschrank (100) ankommt;
Detektieren unter Verwendung des Türsensors (140), wann der Verkäufer eine Tür (142) des Kühlschranks öffnet;
Verfolgen einer Gewichtszunahme eines oder mehrerer verderblicher Waren auf der einen oder den mehreren Gewichtsmesseinheiten (120);
Bestimmen einer neuen Menge der einen oder mehreren verderblichen Waren, die durch den Verkäufer hinzugefügt wurden, als Reaktion auf die Gewichtszunahme unter Verwendung der Steuerung (212); und
Übermitteln einer Zahlung an den Verkäufer unter Verwendung des Kommunikationsmoduls (220), wenn die neue Menge gleich der zweiten Menge einer oder mehrerer verderblicher Waren ist.

10. Verfahren nach einem der Ansprüche 2 bis 9, das ferner Folgendes umfasst:
Verriegeln einer Tür (142) zu dem Kühlschrank (100) unter Verwendung der Steuerung (212), wenn alles der einen oder mehreren verderblichen Waren innerhalb des Kühlschranks (102) abgelaufen ist.

11. System zur Bestandsüberwachung verderblicher Waren, das Folgendes umfasst:
einen Prozessor (214); und
einen Speicher (216), der computerausführbare Anweisungen umfasst, die bei Ausführung durch den Prozessor den Prozessor dazu veranlassen, Vorgänge durchzuführen, wobei die Vorgänge Folgendes umfassen:
Detektieren, unter Verwendung von einer oder mehreren Gewichtsmesseinheiten (120), eines Gewichts von einer oder mehreren verderblichen Waren auf der einen oder den mehreren Gewichtsmesseinheiten;
Bestimmen einer Menge der einen oder mehreren verderblichen Waren innerhalb eines gekühlten Fachs (102) eines Kühlschranks (100) unter Verwendung einer Steuerung (212) als Reaktion auf das Gewicht der einen oder mehreren verderblichen Waren;
Detektieren einer Gewichtsabnahme der einen oder mehreren verderblichen Waren unter Verwendung der einen oder mehreren Gewichtsmesseinheiten;
Bestimmen unter Verwendung der Steuerung, dass die Gewichtsabnahme, die ansonsten als eine Bestandsabnahme der einen oder mehreren verderblichen Waren registriert würde, aufgrund eines Wasserverlusts der einen oder mehreren verderblichen Waren war, wobei der Bestimmungsschritt durchgeführt wird durch:
Bestimmen unter Verwendung eines Kassenregisters, dass die eine oder mehreren verderblichen Waren nicht einem Verkauf aus dem Kassenregister zugeordnet wurden; und/oder
Bestimmen unter Verwendung eines Türsensors (140), dass eine Tür (142) zu dem Kühlschrank nicht geöffnet wurde; und/oder
Bestimmen unter Verwendung einer oder mehrerer Kameras (160), dass die eine oder mehreren verderblichen Waren nicht innerhalb des Kühlschranks bewegt wurden;
Detektieren unter Verwendung der Steuerung, wenn die Menge der einen oder mehreren verderblichen Waren gleich oder kleiner als eine ausgewählte Menge ist; und
Übertragen einer Benachrichtigung an mindestens eines von einer Ladenverwaltungsvorrichtung (270) und einer Verkäufervorrichtung (280) unter Verwendung eines Kommunikationsmoduls (220), wenn die Menge der einen oder mehreren verderblichen Waren gleich oder kleiner als eine ausgewählte Menge ist.

12. System zur Bestandsüberwachung verderblicher Waren nach Anspruch 11, wobei die Benachrichtigung an die Verkäufervorrichtung (280) eine Bestellung einer zweiten Menge einer oder mehrerer verderblicher Waren umfasst; und optional wobei die Vorgänge ferner Bestimmen eines Verkäufers (290) aus einem oder mehreren Verkäufern als Reaktion auf mindestens eines von Zustimmungsbewertungen jedes der einen oder mehreren Verkäufer und einer Entfernung von dem Kühlschrank (100) zu jedem der einen oder mehreren Verkäufer, wobei der Verkäufer im Besitz der Verkäufervorrichtung (280) ist, umfassen.

13. System zur Bestandsüberwachung verderblicher Waren nach Anspruch 11, wobei die Vorgänge ferner Folgendes umfassen:
Verriegeln einer Tür des Kühlschranks (100) unter Verwendung der Steuerung (212), wenn die Menge der einen oder mehreren verderblichen Waren gleich oder kleiner als eine ausgewählte Menge ist.

14. System zur Bestandsüberwachung verderblicher Waren nach Anspruch 11, wobei die Vorgänge ferner Folgendes umfassen:
Verringern einer Kühlausgabe des Kühlschranks (100) unter Verwendung der Steuerung (212), wenn die Menge der einen oder mehreren verderblichen Waren gleich oder kleiner als eine ausgewählte Menge ist.

15. System zur Bestandsüberwachung verderblicher Waren nach Anspruch 12, wobei die Vorgänge ferner Folgendes umfassen:
Empfangen einer Annahme von der Verkäufervorrichtung (280) unter Verwendung des Kommunikationsmoduls (220) als Reaktion auf die Bestellung einer oder mehrerer verderblicher Waren, die in der Benachrichtigung beinhaltet ist; und/oder
Verfolgen eines Standorts des Verkäufers (290) unter Verwendung von GPS, wenn der Verkäufer die Bestellung einer oder mehrerer verderblicher Waren an den Kühlschrank (100) liefert, und optional
Übertragen eines Standorts des Verkäufers an die Ladenverwaltungsvorrichtung (270).

## Revendications

1. Procédé de surveillance de stocks de marchandises périssables, le procédé comprenant :
la détection, à l'aide d'une ou de plusieurs unités de mesure de poids (120), d'un poids d'une ou de plusieurs marchandises périssables sur les une ou plusieurs unités de mesure de poids ;
la détermination, à l'aide d'un dispositif de commande (212), d'une quantité des une ou plusieurs marchandises périssables à l'intérieur d'une zone en réponse au poids des une ou plusieurs marchandises périssables ;
la détection, à l'aide des une ou plusieurs unités de mesure de poids, d'une diminution de poids des une ou plusieurs marchandises périssables ;
la détermination, à l'aide du dispositif de commande, que la diminution de poids, qui autrement serait enregistrée comme une diminution des stocks des une ou plusieurs marchandises périssables, était due à une perte d'eau des une ou plusieurs marchandises périssables, l'étape de détermination étant exécutée :
en déterminant, à l'aide d'une caisse enregistreuse, que les une ou plusieurs marchandises périssables n'étaient pas associées à une vente à partir de la caisse enregistreuse ; et/ou
en déterminant, à l'aide d'un capteur de porte (140), qu'une porte (142) menant à la zone n'a pas été ouverte ; et/ou
en déterminant, à l'aide d'une ou de plusieurs caméras (160), que les une ou plusieurs marchandises périssables n'ont pas été déplacées à l'intérieur de la zone ;
la détection, à l'aide du dispositif de commande, du moment où la quantité des une ou plusieurs marchandises périssables est égale ou inférieure à une quantité sélectionnée ; et
la transmission, à l'aide d'un module de communication (220), d'une notification à au moins l'un parmi un dispositif de gestion de magasin (270) et un dispositif de fournisseur (280), lorsque la quantité des une ou plusieurs marchandises périssables est égale ou inférieure à une quantité sélectionnée.

2. Procédé selon la revendication 1, dans lequel le procédé comprend un procédé de surveillance de stocks de marchandises périssables dans un réfrigérateur (100) et comporte :
la détermination, à l'aide du dispositif de commande (212), d'une quantité des une ou plusieurs marchandises périssables dans un compartiment réfrigéré (102) d'un réfrigérateur en réponse au poids des une ou plusieurs marchandises périssables ;
et dans lequel le fait de déterminer, à l'aide du dispositif de commande, si la diminution de poids était due à une perte d'eau des une ou plusieurs marchandises périssables comprend :
la détermination, à l'aide d'une caisse enregistreuse, que les une ou plusieurs marchandises périssables n'étaient pas associées à une vente à partir de la caisse enregistreuse ; et/ou
la détermination, à l'aide d'un capteur de porte (140), qu'une porte (142) menant au réfrigérateur n'a pas été ouverte ; et/ou
la détermination, à l'aide d'une ou de plusieurs caméras (160), que les une ou plusieurs marchandises périssables n'ont pas été déplacées à l'intérieur du réfrigérateur.

3. Procédé selon la revendication 2, dans lequel la notification au dispositif de fournisseur (280) comporte une commande d'une seconde quantité d'une ou de plusieurs marchandises périssables ; et éventuellement,
la détermination d'un fournisseur (290) à partir d'un ou de plusieurs fournisseurs en réponse à au moins l'une parmi des cotes d'approbation de chacun des un ou plusieurs fournisseurs et une distance du réfrigérateur (100) vers chacun des un ou plusieurs fournisseurs, le fournisseur étant en possession du dispositif de fournisseur.

4. Procédé selon la revendication 2 ou 3, comprenant en outre :
le verrouillage, à l'aide du dispositif de commande (212), de la porte (142) du réfrigérateur (100) lorsque la quantité des une ou plusieurs marchandises périssables est égale ou inférieure à une quantité sélectionnée.

5. Procédé selon la revendication 2, 3 ou 4, comprenant en outre :
la diminution, à l'aide du dispositif de commande (212), d'une sortie de refroidissement du réfrigérateur (100) lorsque la quantité des une ou plusieurs marchandises périssables est égale ou inférieure à une quantité sélectionnée.

6. Procédé selon la revendication 3, comprenant en outre :
la réception, à l'aide du module de communication (220), d'une acceptation du dispositif de fournisseur (280) en réponse à la commande d'une ou de plusieurs marchandises périssables incluse dans la notification.

7. Procédé selon la revendication 6, comprenant en outre :
le suivi, à l'aide d'un système de positionnement global (GPS), d'un emplacement du fournisseur (290) lorsque le fournisseur livre la commande d'une ou de plusieurs marchandises périssables dans le réfrigérateur (100) ; et éventuellement,
la transmission d'un emplacement du fournisseur au dispositif de gestion de magasin (270).

8. Procédé selon la revendication 7, comprenant en outre :
la détermination, à l'aide d'un GPS, du moment où le fournisseur (290) arrive au niveau du réfrigérateur (100) ;
la détection, à l'aide du capteur de porte (140), du moment où le fournisseur ouvre une porte (142) du réfrigérateur ;
le suivi, à l'aide du capteur de porte, d'une quantité de temps pendant laquelle le fournisseur laisse la porte du réfrigérateur ouverte ; et
la transmission d'une notification au dispositif de fournisseur lorsque la quantité de temps est supérieure ou égale à une quantité de temps sélectionnée.

9. Procédé selon la revendication 7, comprenant en outre :
la détermination, à l'aide d'un GPS, du moment où le fournisseur (290) arrive au niveau du réfrigérateur (100) ;
la détection, à l'aide du capteur de porte (140), du moment où le fournisseur ouvre une porte (142) du réfrigérateur ;
le suivi d'une augmentation de poids d'une ou de plusieurs marchandises périssables sur les une ou plusieurs unités de mesure de poids (120) ;
la détermination, à l'aide du dispositif de commande (212), d'une nouvelle quantité des une ou plusieurs marchandises périssables ajoutées par le fournisseur en réponse à l'augmentation de poids ; et
la transmission, à l'aide du module de communication (220), d'un paiement au fournisseur lorsque la nouvelle quantité est égale à la seconde quantité d'une ou de plusieurs marchandises périssables.

10. Procédé selon l'une quelconque des revendications 2 à 9, comprenant en outre :
le verrouillage, à l'aide du dispositif de commande (212), d'une porte (142) du réfrigérateur (100) lorsque l'ensemble des une ou plusieurs marchandises périssables à l'intérieur du compartiment réfrigéré (102) sont périmées.

11. Système de surveillance de stocks de marchandises périssables, comprenant :
un processeur (214) ; et
une mémoire (216) comprenant des instructions exécutables par ordinateur qui, lorsqu'elles sont exécutées par le processeur, amènent le processeur à réaliser des opérations, les opérations comprenant :
la détection, à l'aide d'une ou de plusieurs unités de mesure de poids (120), d'un poids d'une ou de plusieurs marchandises périssables sur les une ou plusieurs unités de mesure de poids ;
la détermination, à l'aide d'un dispositif de commande (212), d'une quantité des une ou plusieurs marchandises périssables dans un compartiment réfrigéré (102) d'un réfrigérateur (100) en réponse au poids des une ou plusieurs marchandises périssables ;
la détection, à l'aide des une ou plusieurs unités de mesure de poids, d'une diminution de poids des une ou plusieurs marchandises périssables ;
la détermination, à l'aide du dispositif de commande, que la diminution de poids, qui autrement serait enregistrée comme une diminution des stocks des une ou plusieurs marchandises périssables, était due à une perte d'eau des une ou plusieurs marchandises périssables, l'étape de détermination étant exécutée :
en déterminant, à l'aide d'une caisse enregistreuse, que les une ou plusieurs marchandises périssables n'étaient pas associées à une vente à partir de la caisse enregistreuse ; et/ou
en déterminant, à l'aide d'un capteur de porte (140), qu'une porte (142) menant au réfrigérateur n'a pas été ouverte ; et/ou
en déterminant, à l'aide d'une ou de plusieurs caméras (160), que les une ou plusieurs marchandises périssables n'ont pas été déplacées à l'intérieur du réfrigérateur ;
la détection, à l'aide du dispositif de commande, du moment où la quantité des une ou plusieurs marchandises périssables est égale ou inférieure à une quantité sélectionnée ; et
la transmission, à l'aide d'un module de communication (220), d'une notification à au moins l'un parmi un dispositif de gestion de magasin (270) et un dispositif de fournisseur (280), lorsque la quantité des une ou plusieurs marchandises périssables est égale ou inférieure à une quantité sélectionnée.

12. Système de surveillance de stocks de marchandises périssables selon la revendication 11, dans lequel la notification au dispositif de fournisseur (280) comporte une commande d'une seconde quantité d'une ou de plusieurs marchandises périssables ; et éventuellement,
dans lequel les opérations comprennent en outre la détermination d'un fournisseur (290) à partir d'un ou de plusieurs fournisseurs en réponse à au moins l'une parmi des cotes d'approbation de chacun des un ou plusieurs fournisseurs et une distance du réfrigérateur (100) vers chacun des un ou plusieurs fournisseurs, le fournisseur étant en possession du dispositif de fournisseur (280).

13. Système de surveillance de stocks de marchandises périssables selon la revendication 11, dans lequel les opérations comprennent en outre :
le verrouillage, à l'aide du dispositif de commande (212), d'une porte du réfrigérateur (100) lorsque la quantité des une ou plusieurs marchandises périssables est égale ou inférieure à une quantité sélectionnée.

14. Système de surveillance de stocks de marchandises périssables selon la revendication 11, dans lequel les opérations comprennent en outre :
la diminution, à l'aide du dispositif de commande (212), d'une sortie de refroidissement du réfrigérateur (100) lorsque la quantité des une ou plusieurs marchandises périssables est égale ou inférieure à une quantité sélectionnée.

15. Système de surveillance de stocks de marchandises périssables selon la revendication 12, dans lequel les opérations comprennent en outre :
la réception, à l'aide du module de communication (220), d'une acceptation du dispositif de fournisseur (280) en réponse à la commande d'une ou de plusieurs marchandises périssables incluse dans la notification ; et/ou
le suivi, à l'aide d'un GPS, d'un emplacement du fournisseur (290) lorsque le fournisseur livre la commande d'une ou de plusieurs marchandises périssables dans le réfrigérateur (100), et éventuellement,
la transmission d'un emplacement du fournisseur au dispositif de gestion de magasin (270).
